# EUROPEAN PATENT APPLICATION

(11) **EP 0 565 032 A1**
(43) Date of publication of application: **13.10.1993**
(21) Application number: 93105617.0
(22) Date of filing: 05.04.1993
(51) Int. Cl.: B09B 3/00, B09B 5/00

(54) **Plant and process for demolishing scrap cars and associated scrap by heat treatment with energy recovery**

(30) Priority: 08.04.1992 IT TO920321
(71) Applicant: FOGGINI Massimo and BLAAS ANSELMI Vittorio trading under the trading style IDEO di FOGGINI Massimo & C. Snc, I-10121 Torino (IT)
(72) Inventor: Foggini , Massimo, I-10024 Moncalieri (IT)
(74) Representative: Modiano, Guido, Dr.-Ing.

(57) **Abstract**

The apparatus comprises: a plurality of preliminary stations (S1...S4) dedicated in succession to identification of the type of vehicle, battery removal and elimination of liquid residues; a successive central station (SC) for heat treatment provided with: controlled-temperature burner means (BR) for burning residual non-metallic materials; mechanical means for eliminating ash; and aspiration means (AP) for ducted elimination of the gaseous products of combustion, associated with heat exchangers (SS) and with terminals (TC-TF) for the chemical-physical treatment of said gaseous products; a terminal station (ST) for compacting and reducing into foundry ingots the metallic materials constituting the residual product of the heat treatment; and electronic processing means (µP) for the controlled advancement of the vehicles being processed, the recognition of the vehicle type, the activation of elements for breaking the windows and for eliminating liquid residues and for controlling the combustion temperature.

## Description

The present invention relates to an apparatus and a process for demolishing motor vehicles and associated scrap by heat treatment with energy recovery.

As is known, motor vehicles, especially private cars, manufactured and marketed during the last thirty years have fittings and components made of non-metallic and usually not biodegradable material.

Most of the fittings, of the internal panels and of the upholstery of said motor vehicles is in fact made of thermoplastic and/or thermosetting polymeric material, and in the last decade the use of these materials has been extended also to the manufacture of structural elements such as bumpers, wheel wells, and occasionally fenders, hoods and other body components usually made from metal plates.

This diversified composition of the components entails considerable problems in demolishing vehicles which have become unusable due to accidents or age or due to other causes which prevent them from being used on roads.

Currently, the very large pool of cars to be demolished is treated with substantially manual methods entailing disassembly by hand of the non-metallic components in order to separate them from the metallic ones, the collection of both types of components and their selective regenerative treatment to partially recover the raw material.

Recovery of metallic materials, despite being onerous, has an acceptable yield in economic terms; recovery of non-metallic materials, particularly polymeric ones, is however economically disadvantageous, both in terms of yield and because the raw material obtained therefrom generally has degraded chemical-physical characteristics which worsen at each recovery cycle.

Consequently, if one considers the costs of the labor required to disassemble and sort the components, current demolition systems are fully unsatisfactory from an economical viewpoint.

Problems in the storage of motor vehicles to be demolished and of the materials recovered from them, and the transfer of said materials to dedicated processing and regeneration terminals also negatively affect the management economy of current demolition methods.

The aim of the present invention, starting from the concept of the above described state of the art, is to solve the problem of motor vehicle demolition in an economical, technically advantageous and ecologically satisfactory manner.

In particular, the present invention has the purpose of recovering the materials composing the motor vehicle in combined terms of energy and raw material, the latter exclusively with regard to the metallic components of the motor vehicle.

Recovery in terms of energy of combustible materials, such as thermoplastics, elastomers, fabrics and the like, which has already been tested in parallel technologies such as heat treatment of solid urban waste, has yielded more than satisfactory and ecologically advantageous results, and another object of the present invention is to provide an apparatus and a process allowing to recover energy -- in the form of heated fluid, steam or superheated steam -- for the heat treatment of vehicles to be demolished and of the associated scrap.

Another object of the present invention is to provide an apparatus which is structurally simple and also allows to sort the recovered metallic components.

In order to achieve this aim, these important objects and others which will become apparent from the following detailed description, the present invention relates to a motor vehicle demolition apparatus the essential characteristic whereof resides in that it comprises:
-- a plurality of preliminary stations provided with conveyor elements, dedicated in succession to the identification of the type of vehicle, to the possible breaking of the windows and of other non-melting glass-like components, to the disassembly of the internal battery and to the possible elimination of residual fuel, cooling liquid and lubricant;
-- a successive central station for primary heat treatment shaped like a tunnel and provided with: controlled-temperature burner means for burning residual non-metallic materials; mechanical means for eliminating ash; and aspiration means for ducted elimination of the gaseous products of combustion, associated with heat exchangers and with chemical-physical treatment terminals respectively for the recovery of the combustion heat, also as regards the primary heat treatment itself, and for the inactivation of said gaseous products;
-- at least one terminal station, arranged downstream of the heat treatment station, for compacting and reducing into foundry ingots the metallic materials constituting the residual product of the heat treatment;
-- electronic processing means, associated with dedicated sensors which are interfaced with numeric-control tools, for the controlled advancement of the vehicles being processed, the recognition of the vehicle type, the activation of elements for breaking the windows and any non-melting glass-like components, the activation of elements for eliminating residual fuel, cooling liquid and lubricant and for controlling the combustion temperature.

Advantageously, according to the present invention, the heat of the metallic materials constituting the residual product of the primary heat treatment (bodies and engines) is recovered and reused for the treatment itself, for example to preheat the combustion air fed to the central station.

The process according to the invention consequently provides for the sequence of at least the following operating steps:
-- nondestructive removal of the internal battery;
-- possible destruction of the windows, of the lights and of any non-melting glass-like materials;
-- primary heat treatment for burning the thermoplastic, thermosetting and elastomeric polymeric materials, performed at temperatures comprised between 300 and 600^{o}C;
-- elimination of the gaseous products of combustion, recovery of the combustion heat of said products and chemical and/or physical inactivation thereof;
-- compaction and conversion into foundry ingots of the metallic materials constituting the residual product of the heat treatment, after possible sorting thereof.

Further details and advantages of the present invention will become apparent from the following detailed description and with reference to the accompanying drawings, given by way of non-limitative example, wherein:

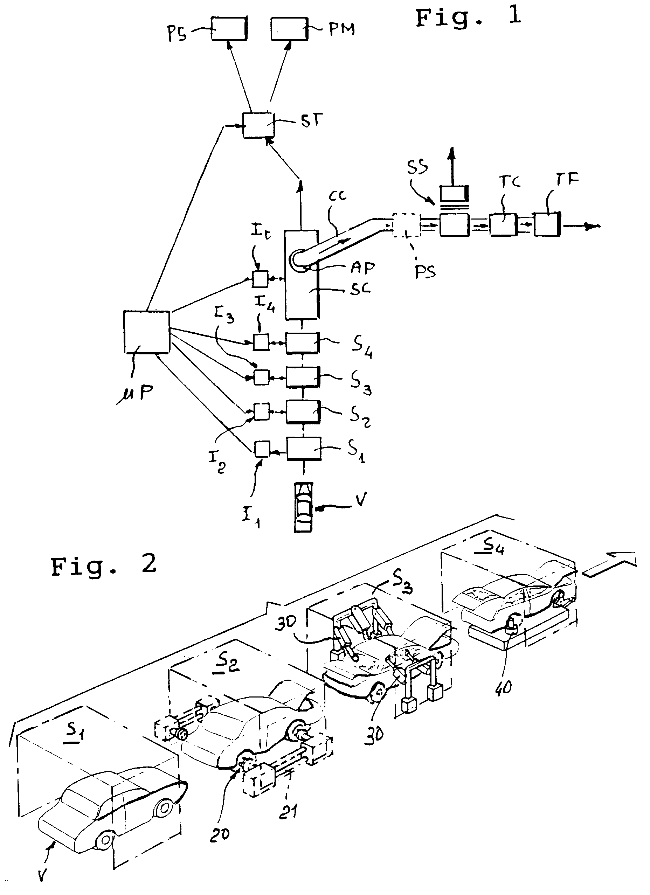

figure 1 is a block diagram of the demolition apparatus according to a preferred embodiment of the present invention;
figure 2 is a schematic perspective view of the stations of the apparatus for the preliminary treatments of the vehicles to be demolished;

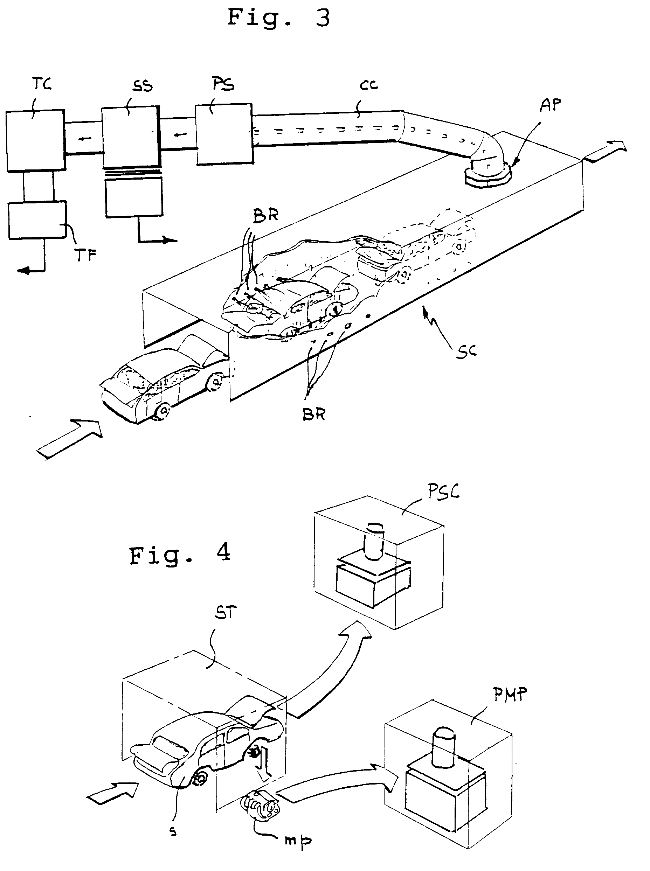

figure 3 is a schematic perspective view of the central station of the apparatus, for the heat treatment of vehicles to be demolished;
figure 4 is a perspective and schematic view of the terminal station for compacting the material constituting the residual product of the heat treatment;
figure 5 is a diagram of the apparatus according to a different embodiment of the present invention;
figure 6 is a perspective view, similar to figure 3, of the central heat treatment station according to the embodiment of figure 5.

With reference to the above drawings, the symbols S1 to S4 designate a plurality of preliminary stations shaped like a tunnel and to which the vehicles V to be demolished are conveyed for example by means of pulling chains or metallic-belt conveyors with a controlled advancement rate. In station S1, the motor vehicles are identified, preferably in an automatic manner, by means of mechanical and/or optical probes (not shown) which can detect typical internal and/or external features of each type of vehicle and which can send a corresponding coded signal to a process computer µp which prepares the subsequent stations S2-S4 for the treatment of the identified vehicle.

In the subsequent station S2, the motor vehicles are stripped of their electric battery and possibly of their tires by nondestructive removal of the wheels, preferably performed by pneumatic tools 20 supported by numeric-control robotized arms 21 which are activated, by means of an interface I₂, by the processor µP according to programs corresponding to the type of the vehicle identified earlier. Tire removal is not mandatory for performing the process according to the present invention, but it can be economically advantageous as far as the recovery of the elastomeric components which can be recycled in industries using byproducts based on elastomers is concerned.

In the station S3, further robotized tools 30, of the type with a striking mass, also controlled by the processor µP by means of an interface I₃, break the windows, and in the station S4 any residual lubricant, fuel and cooling liquid is removed. This last operation is advantageously performed by means of punch-like tools 40 which, under control of the processor µP, by means of the interface I₄, perforate the tank, the oil containment pan associated with the engine and the cooling radiator at the respective minimum level points.

Motor vehicles treated earlier in stations S1 to S4 are subsequently sent to a central heat treatment station SC constituted by a tunnel-shaped structure of adequate extension, provided with burner means suitable to burn the residual non-metallic materials.

Preferably, said central station is provided with rows of burners BR arranged at least at the opposite side walls and supplied with gaseous fuel in excess of air.

The use of methane with a 10-15% excess of combustion air with respect to the stoichiometric quantity is advantageous for this purpose. By means of heat probes arranged inside the tunnel-like structure, the processor µP receives the datum related to the average combustion temperature and said processor, by means of the interface It, adjusts the supply of combustion air in order to keep said average temperature at a value comprised between 400 and 600^{o}C. This temperature, while not substantially altering the physical state of the metals and light alloys present in the vehicle (except for the minimal amounts of tins, which liquefy and pass into the ashes), allows the complete heat degradation of the polymeric and non-polymeric combustible materials, which are substantially capable of forming, by combustion, water, carbon-based compounds such as CO and CO₂ and acid gases such as HCl, HF, NOₓ, SO₂, HCN and NH₃.

These gaseous products of combustion are aspirated and removed from the heat treatment station SC by means of pneumatic aspirators AP and by means of insulated conveyance ducts CC which feed said products to subsequent terminals TC-TF for chemical and physical treatment.

By means of heat exchangers SS arranged upstream of the terminals TC-TF, the combustion heat present in said gases is recovered and used to heat water or produce steam or superheated steam, all of which are usable in facilities for producing heat energy or electric power or for other industrial uses. The chemical and physical treatment of the gaseous products of combustion occurs in a per se known manner with wet, dry or partially wet processes. The dry process is particularly advantageous; in this process, acid gases are neutralized by injecting solid products constituted particularly by lime powder. This neutralization treatment can be preceded by a pyrolysis step, performed at approximately 1200^{o}C and carried out in afterburners PS, and in this case the recovery of heat energy by means of the exchangers SS is performed downstream of the afterburners PS. The pyrolysis process destroys the polymeric chemical structure of the organic-based material, thus forming monomers which are easy to process. In addition to the above gaseous products, combustion generates ash which collects in auger collection units (not shown) provided on the bottom of the tunnel SC; the ash is discharged to be treated in appropriate landfills. When it leaves station SC, the residual metallic structure of the vehicle is sent to a terminal station ST where it is preferably stripped of the engine unit "mp". The bodies "s" and the engine units "mp" are treated separately in respective compaction presses PSC and PMP and are converted into ingots for foundries.

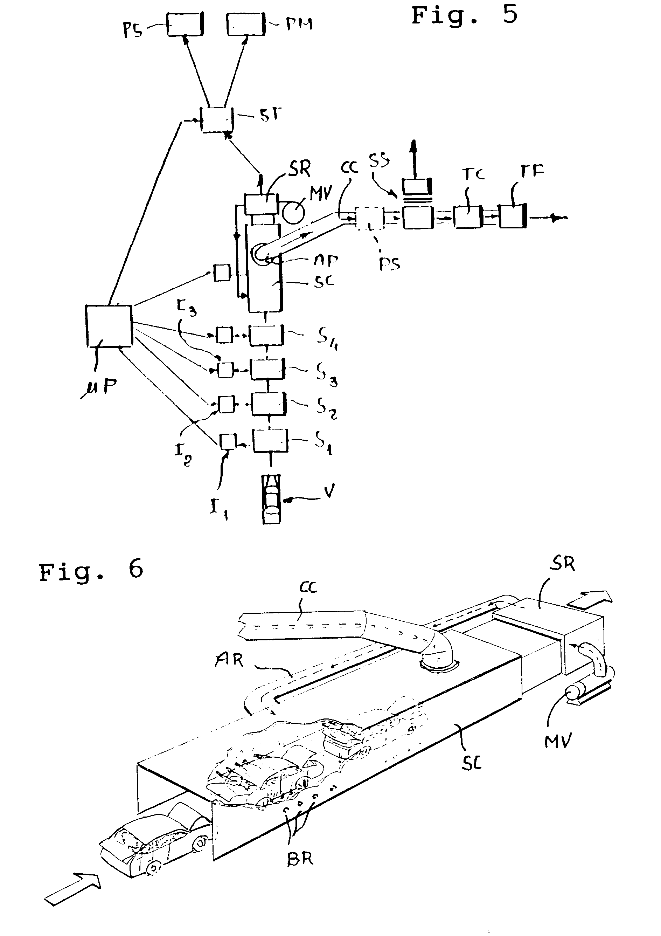

In the different embodiment of figures 5 and 6, an intermediate station SR is provided between the central station SC and the terminal station ST; in this station, the heat of the metallic materials constituted by the bodies and the engines constituting the residual product of the heat treatment is recovered. Preferably, the station SR comprises a tunnel of convenient axial extension in which said metallic materials are struck by a current of air produced by a motorized fan MV. The air heated by contact with said metallic materials is sent, by means of a duct AR, into the central station SC, where it is used as preheated combustion air, with a consequent reduction in the consumption of the fuel fed to the burners BR.

According to a further embodiment of the present invention, the residual heat of said metallic materials is used to preheat water which is subsequently and preferably fed to the exchangers SS to produce steam or superheated steam. In this case, the intermediate station SR is provided with a circulation tank for the water to be preheated, in which said bodies and said engine units are immersed immediately after primary heat treatment.

Naturally, without altering the concept of the invention, the details of the execution of the process and the embodiments of the apparatus may be extensively changed with respect to what has been described and illustrated by way of example without thereby abandoning the scope of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Vehicle demolition apparatus for heat treatment with energy recovery, characterized in that it comprises:
-- a plurality of preliminary stations provided with conveyor elements, dedicated in succession to the identification of the type of vehicle, to the possible breaking of the windows and in general of non-melting glass-like components, to the disassembly of the battery and to the possible elimination of residual fuel, cooling liquid and lubricant;
-- a successive central station for primary heat treatment shaped like a tunnel and provided with: controlled-temperature burner means suitable to burn the residual non-metallic materials; mechanical means for eliminating ash; and aspiration means for ducted elimination of the gaseous products of combustion, associated with heat exchangers and with chemical-physical treatment terminals respectively for the recovery of the combustion heat, also as regards the primary heat treatment, and for the inactivation of said gaseous products;
-- at least one terminal station, arranged downstream of the primary heat treatment station, for compacting and reducing into foundry ingots the metallic materials constituting the residual product of said heat treatment;
-- electronic processing means, associated with dedicated sensors interfaced with numeric-control tools, for controlled advancement of the vehicles being processed, recognition of the vehicle type, activation of possible elements for breaking the windows, elements for eliminating residual fuel, cooling liquid and lubricant, and for controlling the combustion temperature.

2. Apparatus according to claim 1, characterized in that the first preliminary station comprises mechanical probes and optical sensors suitable to detect typical internal and/or external features of each type of vehicle and to send a corresponding coded signal to the process computer.

3. Apparatus according to claims 1 and 2, characterized in that the second preliminary station comprises pneumatic tools for the removal of the wheels, said tools being supported by numeric-control robotized arms which are activated by the process computer by means of programs matching the type of vehicle which has been identified.

4. Apparatus according to claims 1 to 3, characterized in that the third preliminary station comprises robotized tools provided with a striking mass, suitable to break the windows and lights of the vehicle under control of the process computer.

5. Apparatus according to claims 1 to 4, characterized in that the fourth preliminary station comprises punch-like tools activated and positioned by the process computer and suitable to perforate the fuel tank, the oil pan associated with the engine and the cooling radiator at the respective minimum level points.

6. Apparatus according to claim 1, characterized in that said central station for primary heat treatment comprises, inside it, rows of burners which are arranged at least at the opposite side walls.

7. Apparatus according to claim 6, characterized in that said burners are fed with gaseous fuel with an excess of air of 10-15% with respect to the stoichiometric quantity.

8. Apparatus according to claims 1 and 6, characterized in that said central station for primary heat treatment comprises pneumatic aspirators for the gaseous products of combustion.

9. Apparatus according to claim 1, characterized in that it comprises, upstream of the terminals for the chemical and physical treatment of the gaseous products of combustion, afterburner means for secondary heat treatment which perform pyrolysis of said gaseous products of combustion, and in that the heat exchangers for recovering the heat energy of the gaseous products are arranged downstream of said afterburners.

10. Apparatus according to claim 1, characterized in that said terminal station arranged downstream of the station for primary heat treatment comprises means for separating the engine unit from the vehicle body and press means for selectively compacting said bodies and said drive units.

11. Apparatus according to one or more of the preceding claims, characterized in that it comprises an intermediate station which is interposed between the central station and the terminal station and in which the heat of the metallic materials constituting the residual product of the primary heat treatment is recovered.

12. Apparatus according to claims 1 and 11, characterized in that said intermediate station comprises motorized fan means for generating a flow of air and conveyance means for sending said air, preheated by contact with said metallic materials, to the central primary heat treatment station for use as combustion air.

13. Apparatus according to claims 1 and 11, characterized in that said intermediate station is provided with a water circulation tank for receiving said metallic materials by immersion, and in that the water preheated by contact with the metallic materials is sent to the heat exchangers associated with the means for removing the gaseous products of combustion.

14. Vehicle demolition process by heat treatment with heat energy recovery, characterized in that it comprises the sequence of at least the following operating steps:
-- nondestructive removal of the internal battery;
-- destruction of the windows and of any lights made of glass-like material;
-- primary heat treatment which burns the thermoplastic, thermosetting and elastomeric organic-based materials;
-- elimination of the gaseous products of combustion, recovery of the combustion heat of said products and chemical and/or physical inactivation thereof;
-- compaction and conversion into foundry ingots of the metallic materials constituting the residual product of the heat treatment, after possible sorting thereof.

15. Process according to claim 14, characterized in that it furthermore comprises a preliminary step of non-destructive tire removal.

16. Process according to claim 14, characterized in that the heat of the metallic materials constituting the residual product of the primary heat treatment is recovered to preheat the combustion air required for said heat treatment.

17. Process according to claim 14, characterized in that the heat of the metallic materials constituting the residual product of the primary heat treatment is recovered to preheat water.

18. Process according to claim 14, characterized in that the primary heat treatment step is performed at temperatures comprised between 400 and 600^{o}C.

19. Process according to claim 14 to 18, characterized in that the inactivation of the gaseous products of combustion is preceded by a step of secondary heat treatment constituted by the pyrolysis of said gaseous products.
